# EUROPÄISCHE PATENTSCHRIFT

(11) **EP 2 185 049 B1**
(45) Veröffentlichungstag und Bekanntmachung des Hinweises auf die Patenterteilung: **20.07.2011**
(21) Anmeldenummer: 08714304.6
(22) Anmeldetag: 26.03.2008
(51) Int. Cl.: A47J 37/07, A47L 17/02

(54) **REINIGUNGSWANNE FÜR GRILLER**
CLEANING BASIN FOR BARBECUE GRILL
CUVE DE NETTOYAGE POUR BARBECUE

(30) Priorität: 22.08.2007 AT 5072007
(43) Veröffentlichungstag der Anmeldung: 19.05.2010
(73) Patentinhaber: Friedrich, Herbert, 2230 Gänserndorf (AT)
(72) Erfinder: Friedrich, Herbert, 2230 Gänserndorf (AT)
(86) Internationale Anmeldenummer: PCT/AT2008/000107
(87) Internationale Veröffentlichungsnummer: WO 2009/023882

(56) Entgegenhaltungen:
- DE-U1- 20 309 457
- DE-U1- 29 912 514
- US-B1- 6 463 945

## Beschreibung

Es wird eine Reinigungswanne (2) beschrieben, die den zu reinigenden Grillrost in sich aufnimmt, diese Wanne wird soweit mit heißem Wasser befüllt, dass der zu reinigende Grillrost vollständig bedeckt ist. Die mit Wasser gefüllte Reinigungswanne wird über der Grillkohle positioniert, damit die vorhandene Restwärme der Kohle das Wasser weiter erhitzt und somit den Grillrost reinigt. Die Reinigungswanne ist so konstruiert, dass sie problemlos im Kugelgrill verstaut werden kann (3).

Die Erfindung bezieht sich auf die Reinigungswanne für Grillroste, deren Wasserinhalt durch die Griller eigene Glut lange heiß gehalten wird, gleichzeitig ein abbürsten des Grillgitters ermöglicht und als integriertes Einheit zusammen mit dem Griller verstaut werden kann.

Um Grillrückstände auf Grillroste zu entfernen, sind folgende Reinigungswannen bekannt: DE 203 09 457 U1 und DE 299 12 514 U1 Bei den derzeit bekannten Reinigungswannen sind die Wannen unabhängig von der Bauart sowie des Typs des Grillers gestaltet.

Der Erfindung liegt somit die Aufgabe zugrunde, ein rasches erkalten des zugeführten heißen Wassers zu verhindern und ein zusätzliches abbürsten des Grillrostes zu ermöglichen. Weiters macht es die Erfindung möglich, dass die Reinigungswanne zusammen mit dem Griller verstaut werden kann.

Die Erfindung löst die die gestellte Aufgabe dadurch, dass die Reinigungswanne Bauart "Rund" oder "Rechteckig" über der Glut positioniert wird und das warm zu haltende Wasser abgedeckt wird.

Bei der runden Reinigungswanne wird diese in den Kugelgriller eingelegt und über der Glut platziert und anschließend der Deckel aufgesetzt (3). So bleibt das Wasser länger heiß.

Bei der rechteckigen Reinigungswanne wird je nach Bauart des Grillers die Reinigungswanne bei umgelegten Aufnehmem (14) über die Glut gelegt

Der Windschutz (13) wird mittels der Scharniere (25) auf die Reinigungswanne gelegt, so ist gewährleistet, dass die Wärme in der Reinigungswanne bleibt. Der Windschutz fungiert somit als Deckel für die Reinigungswanne. Das zusätzliche oft unerlässliche abbürsten des Grilllrostes wird bei der runden Reinigungswanne während des Einweichens über der Glut dadurch ermöglicht, dass bei der runden Reinigungswanne eine verpresste Kante den Grillrost aufnimmt und dadurch den Grillrost nicht bis zum Wannenboden absinken lässt (9). Eine im Boden der Reinigungswanne gepresste Vertiefung ermöglicht es den runden Grillrost senkrecht zu bürsten, ohne dass dieser wegrutscht. (11).

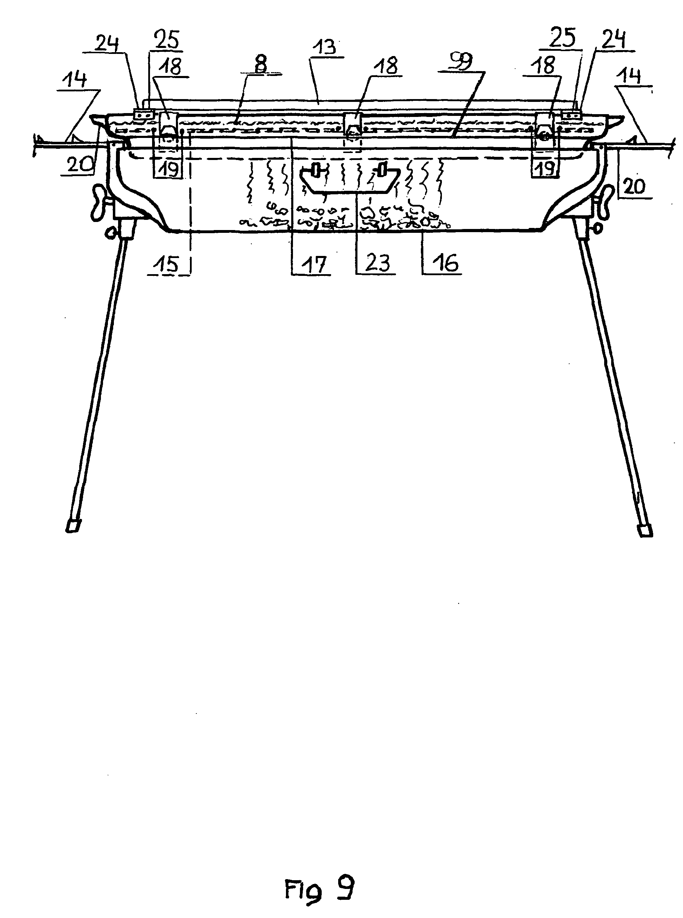

Bei der rechteckigen Reinigungswanne werden in die Wanne drei Stützen für den Grillrost eingelegt (18), sodass beim einweichen über der Glut (Fig.9) der Grillrost nicht bis zum Wannenboden absinkt Positionierungszapfen an der Reinigungswanne verhindert das wegrutschen der Stützen beim bürsten (19).

Die Erfindung Löst die Aufgabe die Reinigungswanne in einen Griller zu integrieren dadurch, dass für den Kugelgriller (4) die Reinigungswanne exakt der Grillerform angepasst wird. Ist beim Einweichvorgang die Reinigungswanne mit dem Boden zur Glut positioniert (3), so wird sie jetzt mit dem Boden nach oben Richtung Deckel, zusammen mit dem gereinigten Grillrost positioniert (4). Durch das aufsetzen des Deckels, ist der Griller und die Reinigungswanne zusammen zu verstauen.

Für den rechteckigen Griller (8) löst die Erfindung die Aufgabe die Reinigungswanne in einen Griller zu integrieren dadurch, dass die Reinigungswanne (17) größer ist wie die größten Abmaße der Grillkohlenwanne (16). Dafür wird die Reinigungswanne mit dem Boden nach oben platziert und fungiert somit als Abdeckung (17). Dadurch dass die Grillstützen seitlich Federklemmen besitzen, können diese in der Reinigungswanne verbleiben (7). Zum Schluss wird der Grillrost sowie die Stützen in die Reinigungswanne eingelegt. Die Reinigungswanne wird anschleißend auf den Griller aufgesetzt (8) und ist fertig zum verstauen.

Bei der Gestaltung der Reinigungswanne ist darauf zu achten, dass eine nicht zu große Wassermenge als Füllmenge in betracht gezogen wird (6,2). Dies deshalb um einen längeren Efiitzungszeitraum zu gewährleisten. Der zu reinigende Grillrost soll nach oben mit ca. 2 cm und nach unten mit ca. 2 cm Wasser bedeckt werden.

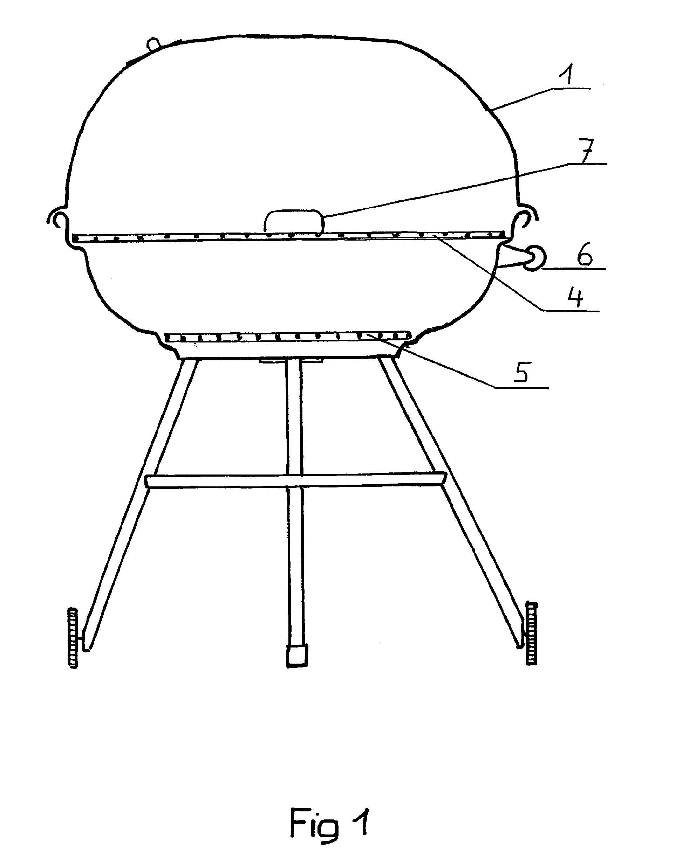

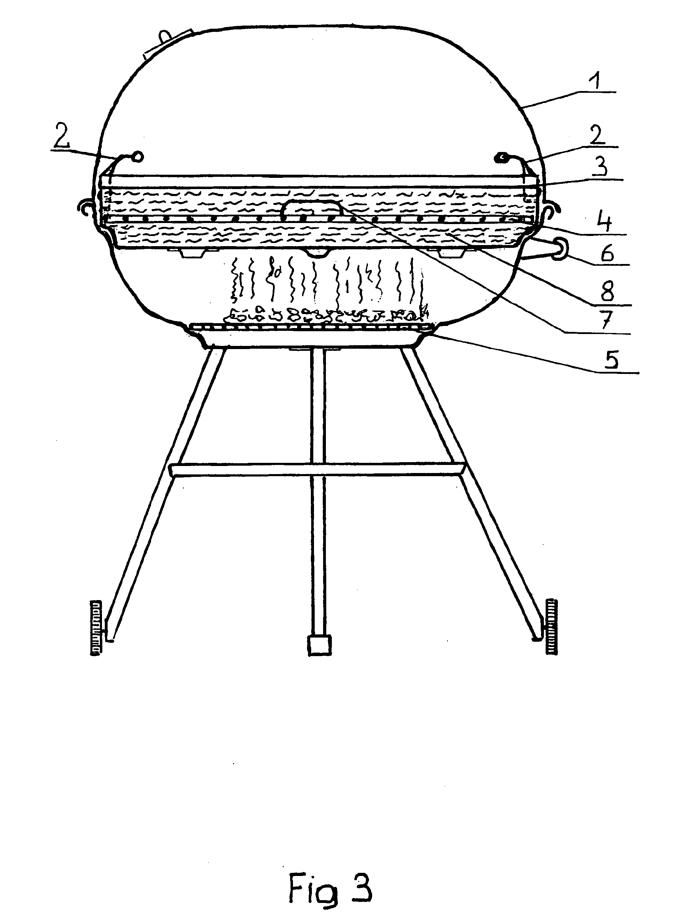

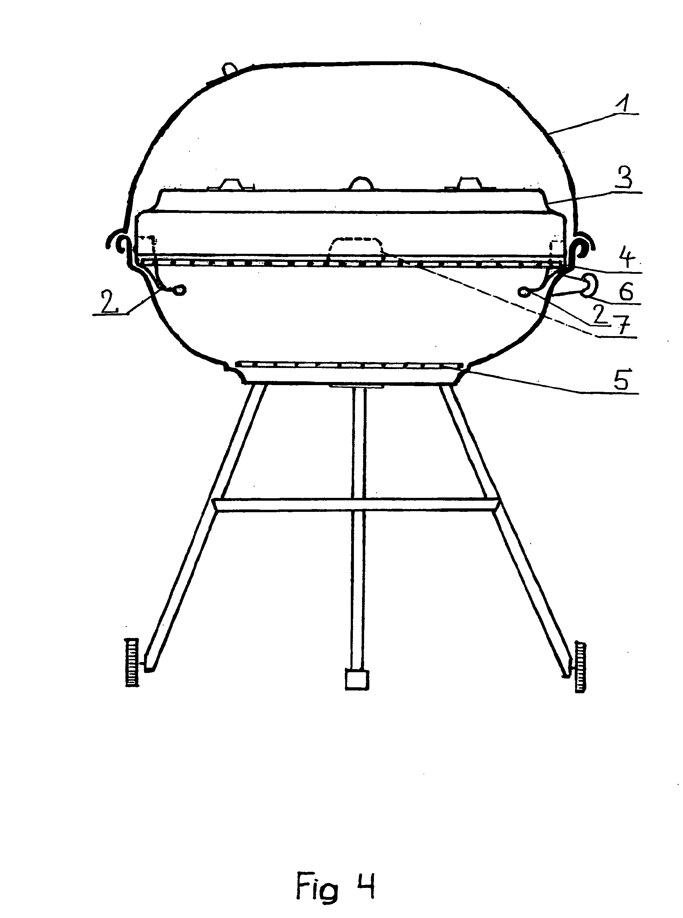

In den Zeichnungen Fig.1 bis Fig.4 ist der Erfindungsgegenstand für einen Holzkohle-Kugelgrill beispielsweise dargestellt.

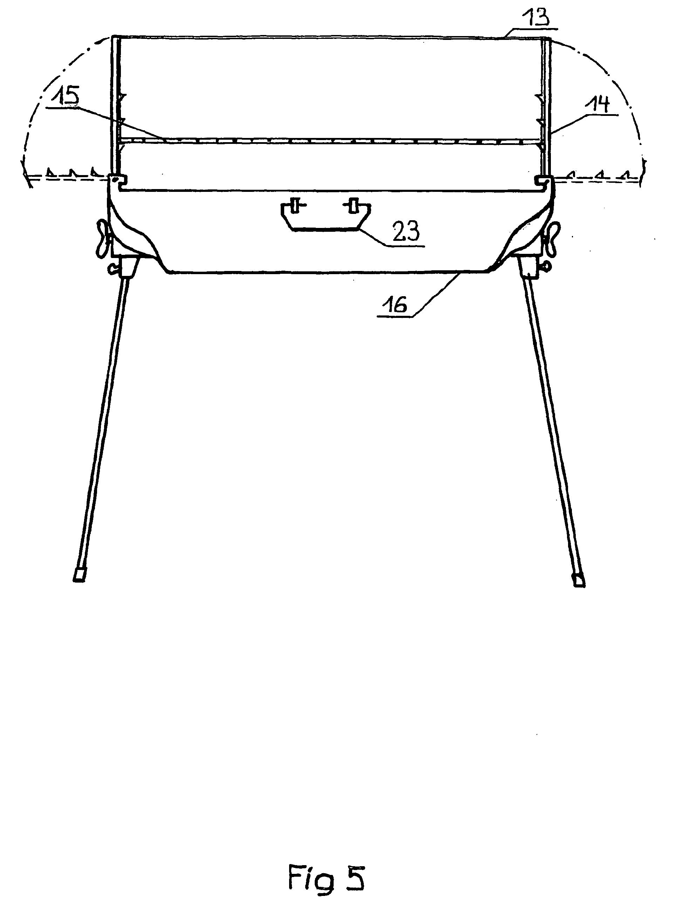

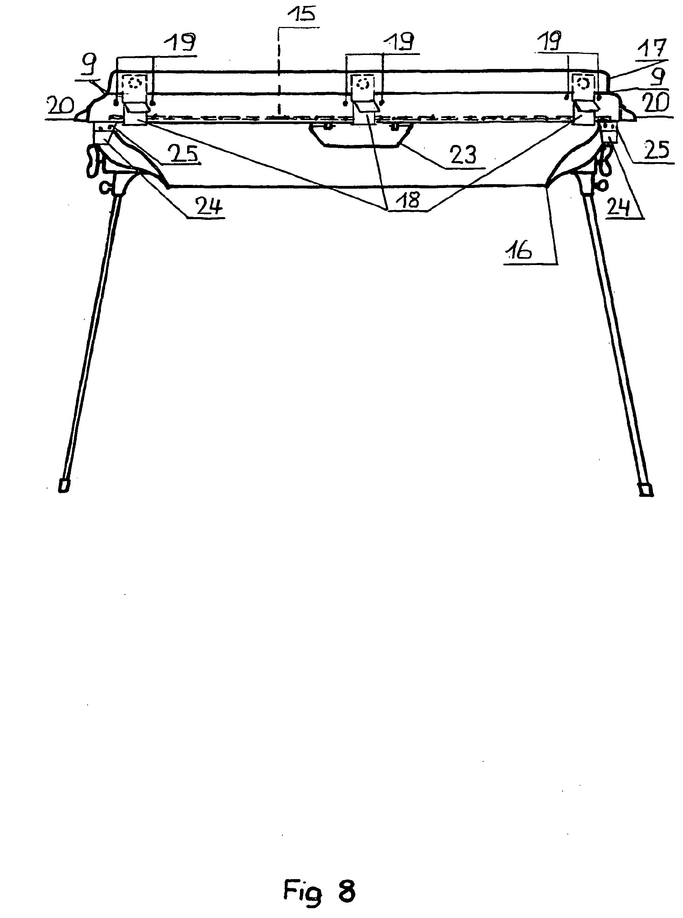

In den Zeichnungen Fig. 5 bis Fig.9 ist der Erfindungsgegenstand für einen rechteckigen Holzkohle-Grill beispielsweise dargestellt.

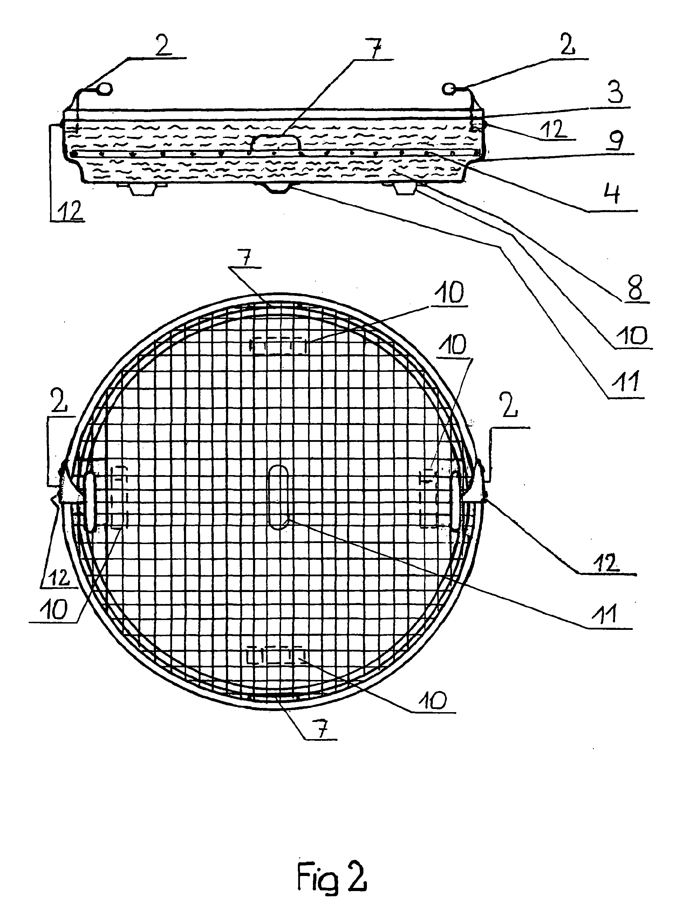

Es zeigt Fig.2 als runde Reinigungswanne (3) mit zwei Tragegriffen (2) aus Stahldraht, die durch Scharniere (12) 180° verdrehbar sind und den zum einweichen bereiten Grillrost (4), der auf einer verpressten Kante (9) aufliegt, so dass die Wasserfüllung (8) den Grillrost (4) beidseitig gleichmäßig bedeckt eine ovale gepresste Vertiefung (11) ermöglicht das Abbürsten in senkrechter Position. 4 Stk. Bodenfüße (10) ermöglichen das Abstellen der Wanne im waagrechten Zustand.

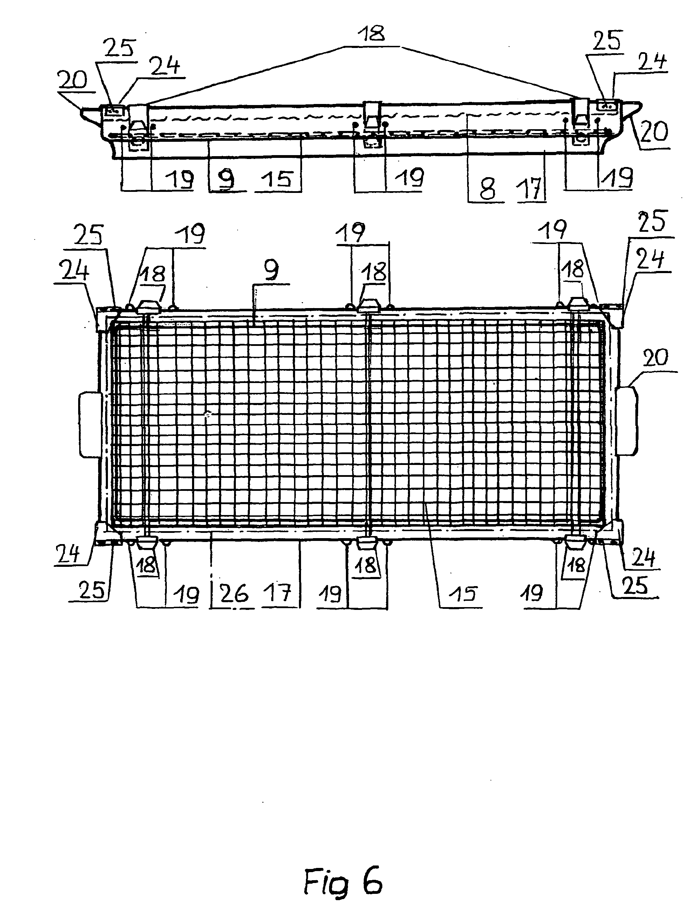

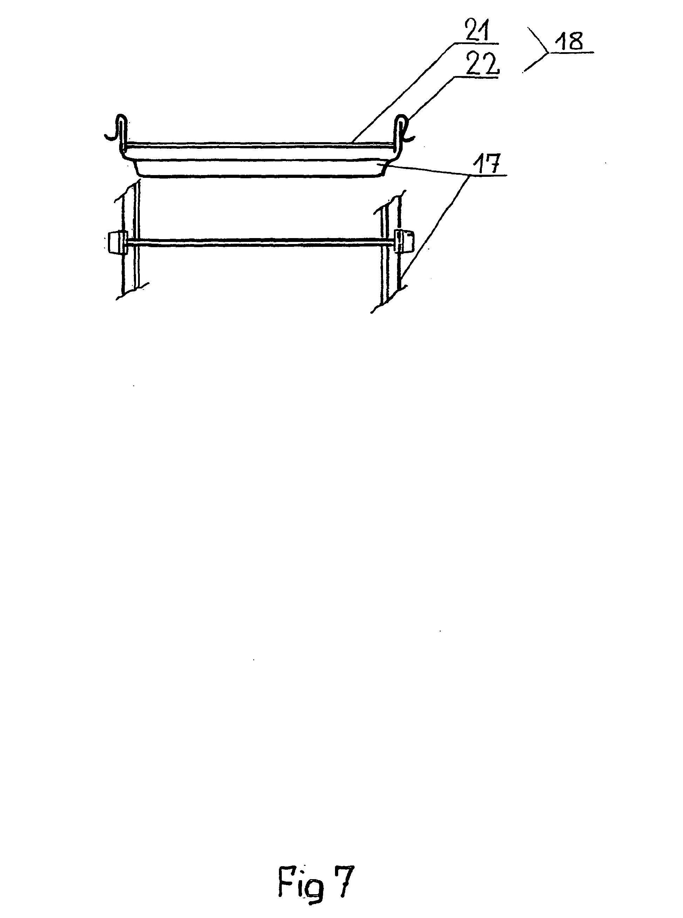

In der Zeichnung (Fig.6) ist der Erfindungsgegenstand beispielsweise dargestellt. Es zeigt Fig.6 als rechteckige Reinigungswanne (17) mit zwei Tragegriffen (20). In die Reinigungswanne (17) eingelegt, ist der zu reinigende Grillrost (15) der auf 3 Stützen (18) für den Grillrost aufliegt, die durch die Positionszapfen (19) gleichmäßig verteilt und gegen seitliches verrutschen abgestützt werden. Die Stützen für den Grillrost (18) garantieren, dass der Grillrost (15) von der Wasserfüllung (8) gleichmäßig bedeckt ist. Die vier Eckauflagen (24) mit Scharnieren (25), die um 180° klappbar sind, dienen als Aufnahme für die Abdeckung. In der Zeichnung (fig.7) ist der Erfindungsgegenstand beispielsweise dargestellt. Die Fig.7 zeigt eine Stütze für den Grillrost (18), bestehend aus einer Rundstange (21) und einer daran seitlich befestigten Federklemme (22). Diese werden über die Reinigungswanne (17) seitlich aufgesteckt.
- 1.: Grilleroberteil = Deckel
- 2.: Tragegriffe von Reinigungswanne
- 3.: Reinigungswanne
- 4.: Grillrost - ( eingelegt zum Einweichen)
- 5: Kohlenrost
- 6.: Grillergriff
- 7.: Tragegriff von Grillrost
- 8.: Waschfüllung
- 9.: Verpresste Kante - (für Auflage von Grillrost)
- 10.: 4 Stück Bodenfüsse
- 11.: Gepresste ovale Vertiefung
- 12.: Scharniere für Tragegriffe von Reinigungswanne
- 13.: abnehmbare abgewinkelter Windschutz
- 14.: hochklappbare Seiten für Aufnahme von Grillrost
- 15.: Grillrost
- 16.: Grillkohlenwanne
- 17.: Reinigungswanne
- 18.: Stützen für Grillrost
- 19.: Positionszapfen für Grillrost
- 20.: Tragegriff von Grillwanne
- 21.: Rundstange
- 22.: Federklemme
- 23.: Traggriff von Grillkohlenwanne
- 24.: Eckauflage zum Auflegen vom abnehmbaren Windschutz oder Abdeckblech
- 25.: Scharnier zu Eckauflage
- 26.: Auflagelinie für abnehmbaren Windschutz

## Patentansprüche

1. Vorrichtung zur Reinigung des Grillrostes von Kugelgrillern oder rechteckigen Grillern mit einer wassergefiillten Reinigungswanne im Griller, die über der Restglut positioniert ist und sowohl beim waagrechten als auch beim senkrechten Abbürsten nicht wegrutscht, **dadurch gekennzeichnet, dass** die Reinigungswanne mit einer verpressten Kante (9) und mit einer oval gepressten Vertiefung (11) im Wannenboden versehen ist.

2. Vorrichtung zur Reinigung des Grillrostes von Kugelgrillern nach Anspruch 1, **dadurch gekennzeichnet, dass** der Grillrost (4) auf einer verpressten Kante (9) der Reinigungswanne (3) aufliegt.

3. Vorrichtung zur Reinigung des Grillrostes von rechteckigen Grillern nach Anspruch 1, **dadurch gekennzeichnet, dass** der Grillrost (15) auf entnehmbaren Stützen (18) in der Reinigungswanne (17) aufliegt.

4. Vorrichtung zur Reinigung des Grillrostes nach Anspruch 1, **dadurch gekennzeichnet, dass** die Reinigungswanne (17) mit aufgesteckten Stützen (18) als Abdeckung für den Griller eingesetzt wird.

## Claims

1. An apparatus for cleaning the grate of kettle barbecue grills or rectangular grills, composing a water-filled cleaning basin in the grill which is positioned over the remaining embers and which does not slip away while being brushed horizontally or vertically, **characterized in that** the cleaning basin is provided with a pressed edge (9) and with an ovally pressed depression (11) in the floor of the basin.

2. An apparatus for cleaning the grate of kettle grills according to claim 1, **characterized in that** the grate (4) rests on a pressed edge (9) of the cleaning basin (3).

3. An apparatus for cleaning the grate of rectangular grills according to claim 1, **characterized in that** the grate (15) rests on removable supports (18) in the cleaning basin (17).

4. An apparatus for cleaning the grate in claim 1, **characterized in that** the cleaning basin (17) is used with inserted supports (18) as a cover for the grill.

## Revendications

1. Dispositif pour le nettoyage de la grille de barbecues boules ou de barbecues rectangulaires avec un bac de nettoyage rempli d'eau dans le barbecue, qui est placé pardessus les braises restantes et qui ne glisse pas lors d'un brossage horizontal aussi bien que vertical, **caractérisé en ce que** le bac de nettoyage est muni d'un bord formé par pressage (9) et d'un creux ovale pressé (11) dans le fond du bac.

2. Dispositif pour le nettoyage de la grille de barbecues boule selon la revendication 1, **caractérisé en ce que** la grille (4) repose sur un bord formé par pressage (9) du bac de nettoyage (3).

3. Dispositif pour le nettoyage de la grille de barbecues rectangulaires selon la revendication 1, **caractérisé en ce que** la grille (15) repose sur des supports amovibles (18) dans le bac de nettoyage (17).

4. Dispositif pour le nettoyage de la grille selon la revendication 1, **caractérisé en ce que** le bac de nettoyage (17) avec les supports (18) insérés est utilisé comme couvercle pour le barbecue.
